# EUROPEAN PATENT SPECIFICATION

(11) **EP 1 147 005 B1**
(45) Date of publication and mention of the grant of the patent: **09.07.2003**
(21) Application number: 00903036.2
(22) Date of filing: 24.01.2000
(51) Int. Cl.: B29C 65/44, B62D 25/24

(54) **CONNECTION WITH A COMPONENT FABRICATED OF A THERMOPLASTIC ELASTOMER**
VERBINDUNG MITTELS EINES THERMOPLASTISCHEN-ELASTOMER ELEMENTES
RACCORD AU MOYEN D'UN COMPOSANT FABRIQUE A PARTIR D'UN ELASTOMERE THERMOPLASTIQUE

(30) Priority: 26.01.1999 NL 1011134
(43) Date of publication of application: 24.10.2001
(73) Proprietor: DSM N.V., 6411 TE Heerlen (NL)
(72) Inventor: AVIDES MOREIRA, Antonio, NL-6221 CB Maastricht (NL); BULTERS, Markus, Johannes, Henricus, NL-6137 KV Sittard (NL)
(74) Representative: Krijgsman, Willem
(86) International application number: NL0000048
(87) International publication number: WO00044551

(56) References cited:
- EP-A- 0 834 442
- DE-A- 3 142 850
- US-A- 4 390 668
- US-A- 5 829 482

## Description

The invention relates to a component fabricated of a thermoplastic elastomeric material exhibiting at least two different melting points, which is applied in a permanent connection between at least two components in an object and a process for the fashioning of this connection, comprising exposure to a temperature which lies between the lowest and the highest melting point of the thermoplastic elastomeric. The invention is particularly aimed at a process for bringing about a sealing connection between two components in an object.

Such a component is known from DE-A-3142850. Sealing components of thermoplastic elastomeric materials are known and find wide application, for example as a body plug, that is, a plug for sealing holes needed in the construction of, for example, a car body or refrigerator to prevent ingress of water, caps, sealing rings, shrink-on sleeving and the like. Application of sealing objects of thermoplastic elastomeric material presents important advantages in that the thermoplastic properties allow more complex mouldings to be mass-produced in a fairly simple manner, which is not possible in the case of rubber materials since, here, vulcanisation needs to take place in the mould. The known sealing component from DE-A-3142850 is a body plug made from a mixture of 5-10 %wt. of a thermoplastic elastomer with temperature-resistance upto 240°C, 65-80 %wt. of a thermoplastic elastomer with temperature-resistance upto 160°C and 15-30 %wt. of carbon black. The body plug is made to adhere to a metal body by heating to a temperature between 160 and 240°C.

However, a disadvantage of the known sealing or connecting objects is that they allow only a limited degree of deformation when they are fitted. In general a degree of deformation of the order of some tens of percent is not completely reversible and results in permanent deformation. If the initial deformation is 100%, permanent deformation often can be as high as 40%. This is referred to as a tension set of 40%. In general, such tension set is less than 10% for rubbers. In some cases, performance is inadequate because of this higher tension set and also because thermoplastic elastomeric materials generally are harder due to the presence of hard segments in the matrix. Consequently, the object of the invention is to provide a process for the fashioning of a permanent connection between two components of an object, in which at least one component is obtained by moulding a thermoplastic elastomeric material, which results in an improved seal.

The object of the invention is achieved by the process wherein the thermoplastic elastomeric material contains a proportion of more than 50 %wt. of a component having the highest melting point and a proportion of more than 4 %wt. of the low-melting component (relative to the total proportion of polymer).

Thermoplastic elastomeric materials are described extensively in for example Thermoplastic Elastomers, 2nd impression, G. Holden e.a. editor, Hanser Verlag (1996), ISBN 1-56990-205-4, and the literature cited therein.

A thermoplastic elastomeric material having at least two melting points can be obtained in various ways. A simple method is the one whereby a higher melting thermoplastic elastomer is blended with a lower melting thermoplastic elastomer. Although it is preferred for the polymeric components of the thermoplastic elastomeric material having at least 2 different melting points to possess all elastomeric properties, the use of one or more polymers that do not possess these elastomeric properties as a component of the elastomeric material for the process of the invention is not ruled out. In such case the non-elastomeric component preferably is the component having the lowest melting point.

The thermoplastic elastomeric material may contain common additives, for example fillers such as carbon black, talcum, reinforcing fillers such as mica, stabilisers, colorants and processing aids.

The choice of the components for the thermoplastic elastomeric material is dictated not only by the mechanical requirements but also, in part, by the medium to which the seal is exposed, the operating temperature and the temperature to which the seal is temporarily exposed in the process of the invention. One skilled in the art will make a choice from case to case on the basis of their knowledge of the physical and chemical properties of the various components.

If the sealing connection is used as a body plug, the temperature to which it is temporarily exposed will usually coincide with the temperature of the paint spraying line in which the car body part containing the seal is spray-painted. In that case, the duration of the temporary exposure will in general also coincide with the time it takes for the paint to be applied and to cure. This temperature usually is between 150 and 200°C and the duration of the operation between 10 and 2000 seconds.

In the above-mentioned case, the choice of the components of the thermoplastic elastomeric material needed in the process of the invention is adapted to the given conditions of the paint spraying line. In other cases, in which for example the chemical properties of this sealing material play an overriding role in the choice of the components, the temperature to which the component is exposed in the process of the invention will be determined by the material selection. In the case of the body plug for car body parts, it is often a secondary requirement that the component must be well paintable. In that case a somewhat polar material is to be preferred. Particularly suitable in this respect are copolyether esters composed of hard polyester segments derived from alkylene diols and aromatic or cycloaliphatic dicarboxylic acids, for example polyethylene naphthalate, polypropylene terephthalate and polybutylene terephthalate and soft segments derived from alkylene oxide-based polyols such as ethylene oxide, propylene oxide and butylene oxide or combinations thereof. Use is preferably made of copolyether esters based on polybutylene terephthalate and polybutyleneoxide diol or ethylene oxide-terminated polypropyleneoxide diol.

The proportion of the component having the highest melting point (relative to the total proportion of polymer) will in general be more than 50 %wt. The proportion of the low-melting component is in general at least 1 %wt. , preferably 4 %wt. and most preferably at least 10 %wt.

It is preferred for the components to be so chosen that the melting points of the lowest melting and the highest melting components differ by at least 30°C; more preferably, this difference is at least 40°C and most preferably at least 50°C. In practice, a minimum difference of 10°C seems necessary for the techniques currently available.

The difference between the elevated temperature and the melting point of the lowest melting component is to be chosen depending on the time during which the component is exposed to the elevated temperature. In general, this difference is between 10 and 50°C, with a greater temperature difference being preferred for a brief treatment and a smaller temperature difference being sufficient in the case of prolonged treatment.

During the exposure to the elevated temperature it may be advantageous to press the components that make up the connection onto one another with a mild force. In general, such force is so chosen that only minor deformation of the components that make up the connection can occur. One skilled in the art can establish this on a case-to-case basis.

Moulding of the component is not bound to any particular technique and may be effected by common techniques such as injection moulding and extrusion techniques.

Also covered by the invention is a thermoplastic elastomeric component suited to form a connection using the process of the invention.

A surprising additional advantage of the process of the invention and of the components suited for use in the process of the invention is that exposure of the components that make up the connection to the elevated temperature substantially nullifies the tension set, i.e. deformation, if any, occurring during the fitting of the components, so affording higher reproducibility of the seal quality. This is particularly the case with body plugs as used in for example car body components.

The invention is now elucidated by the following examples and comparative examples. It will be clear to those skilled in the art that the invention is not limited to the combinations of materials and conditions chosen but that these may vary from case to *case.*

Where the description refers to melting point, this should be understood to mean the peak temperature in the 2nd heating curve as determined through differential scanning calorimetry (DSC) at a scanning rate of 20°C/minute.

### Examples and comparative experiment

### Materials used

- Arnitel PL 380®: a polyether ester
   block copolymer, Shore D
   hardness = 38 and melting point
   220°C from DSM, the Netherlands
- Arnitel E 40 D®: a polyether ester
   block copolymer, Shore D
   hardness = 40 and melting point
   150°C from DSM, the Netherlands
- Elvax Low Melt® ethylenevinylacetate copolymer with
   melting point 90°C.
- Sheet steel coated with a primer (epoxy resin with inorganic filler)
- galvanised steel sheet

### Experimental

Granules of the various materials were blended in varying compositions that were subsequently injection moulded in an injection moulding machine provided with a single-screw extruder at a temperature of 235°C and for the rest identical injection moulding conditions in order to test specimens 2 mm thick. The various test specimens were contacted with the steel sheets for 30 minutes at 180°C. A mild pressure of 6 kN was applied in order to ensure proper contact. Next, adhesion between the specimens and the metal substrate was measured by means of the 90° peel test using a Zwick 1445 testing machine. Sample dimensions 1 = 90 mm, w = 30 mm. Table 1 presents the compositions tested and the measuring results obtained.

| Composition | Adhesion on primed steel [J/m²] | Adhesion on galvanised steel [J/m²] | Notes |
|---|---|---|---|
| PL 380 | 0 | 0 | Comp. Exp. |
| E40D | coherent fracture | 333 (20) | Comp. Exp. |
| PL380/E40D 75/25 %wt. | 100 (10) *) | 266 (14) | |
| PL380/E40D 50/50 %wt. | 33 (2) | 200 (8) | some deformation |
| PL380/Elvax 96/4 | 15 (4) | 22 (3) | |
| PL380/Elvax 75/25 | 133 (7) | 200 (10) | |
| PL380/Elvax 50/50 | 333 (14) | 166 (9) | some deformation |

| | | | |
|---|---|---|---|
| *) standard deviation | | | |

As appears from the above results, a very strong connection is brought about by the process of the invention between the (pre-treated) metal surface and the thermoplastic elastomeric component, which heavily contributes to a lasting seal and furthermore is insensitive to mechanical loads, for example shocks and impacts.

Thermoplastic elastomeric components suitable for use in the process of the invention also form part of the invention.

The Shore D hardness of the composition is not necessarily limited to approx. 40 but may vary from very soft to hard depending on the mechanical requirements of the sealing layer.

## Claims

1. Process for the fashioning of a sealing connection between at least 2 components of an object, with at least one component being obtained by moulding a thermoplastic elastomeric material exhibiting at least two different melting points and wherein the component, on being fitted at the location of the desired connection, is exposed to a temperature which lies between the lowest and the highest melting point of the thermoplastic elastomeric material, **characterised in that** the thermoplastic elastomeric material contains a proportion of more than 50 %wt. of a component having the highest melting point and a proportion of more than 4 %wt. of the low-melting component, relative to the total proportion of polymer.

2. Process according to claim 1, wherein the proportion of the low-melting component is more than 10 %wt.

3. Thermoplastic elastomeric component suitable for application in the process of Claim 1 or 2.

4. Body plug suitable for the sealing of openings in car body parts which body plug is obtained by moulding a thermoplastic elastomeric material exhibiting at least 2 melting points, **characterised in that** the thermoplastic elastomeric material contains a proportion of more than 50 %wt. of a component having the highest melting point and a proportion of more than 4 %wt. of the low-melting component, relative to the total proportion of polymer.

5. Body plug according to claim 4, wherein the proportion of the low-melting component is more than 10 %wt.

6. Body plug according to Claim 4 or 5, **characterized in that** it is obtained from a blend of at least two copolyether esters having different melting points.

## Patentansprüche

1. Verfahren zur Herstellung einer Dichtungsverbindung zwischen mindestens zwei Komponenten eines Gegenstands, wobei mindestens eine Komponente erhalten wird mittels Spritzgießen eines thermoplastischen Elastomermaterials, das mindestens zwei verschiedene Schmelzpunkte aufweist und wobei die Komponente beim Anbringen an dem Ort der gewünschten Verbindung einer Temperatur ausgesetzt wird, die zwischen dem niedrigsten und dem höchsten Schmelzpunkt des thermoplastischen Elastomermaterials liegt, **dadurch gekennzeichnet, daß** das thermoplastische Elastomermaterial einen Anteil von über 50 Gew.%. einer Komponente enthält, die den höchsten Schmelzpunkt hat und einen Anteil von über 4 Gew.%. der niedrigschmelzenden Komponente, im Verhältnis zum gesamten Polymeranteil.

2. Verfahren gemäß Anspruch 1, wobei der Anteil der niedrigschmelzenden Komponente über 10 Gew.% liegt.

3. Thermoplastische Elastomerkomponente, die geeignet ist für die Anwendung in dem Verfahren nach Anspruch 1 oder 2.

4. Gehäusestopfen, geeignet zur Abdichtung von Öffnungen in Karosserieteilen, wobei der Gehäusestopfen durch Formpressen eines thermoplastischen Elastomermaterials erhalten wird, das mindestens zwei Schmelzpunkte aufweist, **dadurch gekennzeichnet, daß** das thermoplastische Elastomermaterial einen Anteil von über 50 Gew.%. einer Komponente mit dem höchsten Schmelzpunkt und einen Anteil von über 4 Gew.%. einer niedrigschmelzenden Komponente, im Verhältnis zum gesamten Polymeranteil enthält.

5. Gehäusestopfen gemäß Anspruch 4, wobei der Anteil der niedrigschmelzenden Komponente über 10 Gew.% liegt.

6. Gehäusestopfen gemäß Anspruch 4 oder 5, **dadurch gekennzeichnet, daß** er aus einer Mischung von mindestens zwei Copolyetherestem mit unterschiedlichen Schmelzpunkten erhalten wird.

## Revendications

1. Procédé pour la mise en place d'une connexion d'étanchéité entre au moins 2 composants d'un objet, avec au moins un composant étant obtenu en moulant une matière élastomère thermoplastique ayant au moins deux points de fusion différents et dans lequel le composant, à ajuster au niveau de la connexion voulue, est exposé à une température qui se situe entre le point de fusion le plus faible et le point de fusion le plus élevé de la matière élastomère thermoplastique, **caractérisé en ce que** la matière élastomère thermoplastique contient une proportion supérieure à 50 % en poids d'un composant ayant le point de fusion le plus élevé et une proportion supérieure à 4 % en poids d'un composant ayant le point de fusion le plus faible, par rapport à la proportion totale du polymère.

2. Procédé selon la revendication 1, dans lequel la proportion du composant ayant le point de fusion le plus faible est supérieure à 10 % en poids.

3. Composant élastomère thermoplastique approprié à la fabrication selon le procédé de la revendication 1 ou 2.

4. Bouchon de carrosserie approprié à l'étanchéité des ouvertures dans les parties de carrosserie automobile, lequel bouchon de carrosserie est obtenu par moulage d'une matière élastomère thermoplastique ayant au moins 2 points de fusion, **caractérisé en ce que** la matière élastomère thermoplastique contient une proportion supérieure à 50 % en poids d'un composant ayant le point de fusion le plus élevé et une proportion supérieure à 4 % en poids du composant ayant le point de fusion le plus faible, par rapport à la proportion totale du polymère.

5. Bouchon de carrosserie selon la revendication 4, dans lequel la proportion du composant ayant le point de fusion le plus faible est supérieure à 10 % en poids.

6. Bouchon de carrosserie selon la revendication 4 ou 5, **caractérisé en ce que** l'on obtient ce bouchon de carrosserie à partir d'un mélange d'au moins deux copolyéther-esters ayant des points de fusion différents.
